# EUROPEAN PATENT APPLICATION

(11) **EP 4 102 440 A1**
(43) Date of publication of application: **14.12.2022**
(21) Application number: 20917443.2
(22) Date of filing: 28.12.2020
(51) Int. Cl.: G06Q 50/02, A01G 7/00, G06Q 10/04

(54) **PREDICTION DEVICE, PREDICTION SYSTEM, AND PREDICTION METHOD**

(30) Priority: 07.02.2020 JP 2020020088
(71) Applicant: Yokogawa Electric Corporation, Musashino-shi, Tokyo 180-8750 (JP)
(72) Inventor: SATOU, Hirari, Musashino-shi, Tokyo 180-8750 (JP); HATSUGAI, Emiko, Musashino-shi, Tokyo 180-8750 (JP); TORAI, Soichiro, Musashino-shi, Tokyo 180-8750 (JP)
(74) Representative: Stöckeler, Ferdinand
(86) International application number: PCT/JP2020/049200
(87) International publication number: WO 2021/157260

(57) **Abstract**

A prediction apparatus (10) of the present disclosure includes a memory (12) storing a prediction model for calculating a predicted value of a harvest result including harvest weight and information on physiological disorders of plants in a plant factory (80), and a value of an environmental parameter indicating an environment of the plant factory (80), a controller (11) configured to input the value of the environmental parameter retrieved from the memory (12) into the prediction model to calculate the predicted value of the harvest result, and a communication interface (13) configured to output the predicted value of the harvest result calculated by the controller (11).

## Description

### CROSS-REFERENCE TO RELATED APPLICATION

The present application claims priority to Japanese Patent Application No. 2020-20088 filed on February 7, 2020, the entire contents of which are incorporated herein by reference.

### TECHNICAL FIELD

The present disclosure relates to a prediction apparatus, a prediction system, and a prediction method.

### BACKGROUND

Non-Patent Literature (NPL) 1 discloses a conventional technique for predicting harvest results of plants in a plant factory. In NPL 1, the growth curve of lettuce grown in a plant factory is approximated by a logistic function, and a profit model is created for various target weights of lettuce. Using this profit model, the growth curve is predicted from the seedling stage of lettuce, and the number of growing days that maximizes the profit in the plant factory is calculated.

### CITATION LIST

### Non-patent Literature

NPL 1: Shogo MORIYUKI, Hiroaki KANEDA, Yusaku MIYAGI, Nobuhiro SUGIMURA, and Hirokazu FUKUDA, "Profit Models Based on the Growth Dynamics of Lettuce Populations in a Plant Factory", Environ. Control Biol., 56(4), 143-148, 2018 DOI: 10.2525/ecb.56.143

### SUMMARY

### (Technical Problem)

The light intensity, for example, may be increased to make the plants grow rapidly in order to achieve the harvest weight desired by the user within a predetermined period of time. However, this results in physiological disorders such as tip burn. Harvest weight and physiological disorders thus conflict with each other, and the technology disclosed in NPL 1 has room for improvement in that the technology cannot predict the harvest results while taking harvest weight and physiological disorders into account.

The present disclosure aims to provide a prediction apparatus, a prediction system, and a prediction method that can predict harvest results while taking into account harvest weight and physiological disorders.

### (Solution to Problem)

A prediction apparatus according to an embodiment includes:
a memory storing a prediction model for calculating a predicted value of a harvest result including harvest weight and information on physiological disorders of plants in a plant factory, and a value of an environmental parameter indicating an environment of the plant factory;
a controller configured to input the value of the environmental parameter retrieved from the memory into the prediction model to calculate the predicted value of the harvest result; and
a communication interface configured to output the predicted value of the harvest result calculated by the controller.

This enables prediction of harvest results while taking into account harvest weight and physiological disorders.

In an embodiment, the controller may extract the value of the environmental parameter corresponding to a harvest result desired by a user by referring to a data table in which the value of the environmental parameter is associated with the predicted value of the harvest result, and the communication interface may output the value of the environmental parameter extracted by the controller.

This enables the user to efficiently recognize the environmental conditions needed to achieve the desired harvest results, thereby increasing the yield of the plant factory.

In an embodiment, the controller may calculate the predicted value of the harvest result by changing the value of the environmental parameter and inputting each changed value of the environmental parameter into the prediction model and generate the data table by associating the changed value of the environmental parameter with the calculated predicted value of the harvest result.

This enables the user to efficiently recognize the environmental conditions needed to achieve the desired harvest results, thereby increasing the yield of the plant factory.

In an embodiment, the controller may calculate the predicted value of the harvest result in a case in which the plants are cultivated until harvest time without changing the environment of the plant factory at a predetermined point in time after the start of cultivation of the plants.

This enables the user to manage the plant factory using a prediction model that takes into account harvest weight and information on physiological disorders, which conflict with each other, thereby enabling the user to formulate accurate sales plans.

In an embodiment, the controller may calculate the predicted values of the harvest results in a case in which the plants are cultivated until harvest time after changing the environment of the plant factory, at a predetermined point in time after the start of cultivation of the plants, to an environment specified by a user.

This enables the user to predict the harvest results under the environment specified by the user, thereby enabling the user to formulate accurate sales plans. This is particularly useful in a case in which the plant factory needs to operate in a restricted environment, such as low power consumption, or a case in which the environment of the plant factory is changed on an experimental basis.

In an embodiment, the controller may generate the prediction model by performing machine learning using a measured value of the environmental parameter and a measured value of the harvest result and store the generated prediction model in the memory.

This achieves a highly versatile prediction model that takes into account harvest weight and information on physiological disorders, which conflict with each other. Labor and costs can be reduced when this prediction model is used to manage plant factories.

In an embodiment, information on a production cost of the plants may be further included.

This enables prediction of harvest results while taking into account production costs in addition to harvest weight and physiological disorders.

A prediction system according to an embodiment includes the aforementioned prediction apparatus and a management apparatus configured to communicate with the prediction apparatus, wherein the output is performed via the management apparatus.

This enables prediction of harvest results while taking into account harvest weight and physiological disorders.

A prediction method according to an embodiment is a prediction method using a computer, the prediction method including:
inputting a value of an environmental parameter of a plant factory into a prediction model, for calculating a predicted value of a harvest result including harvest weight and information on physiological disorders of plants in the plant factory, to calculate the predicted value of the harvest result; and
outputting the calculated predicted value of the harvest result.

This enables prediction of harvest results while taking into account harvest weight and physiological disorders.

### (Advantageous Effect)

According to the present disclosure, a prediction apparatus, a prediction system, and a prediction method that can predict harvest results while taking into account harvest weight and physiological disorders can be provided.

### BRIEF DESCRIPTION OF THE DRAWINGS

In the accompanying drawings:
FIG. 1 is a functional block diagram illustrating the configuration of a prediction system according to the present embodiment;
FIG. 2 is a flowchart illustrating a first example of operations by the prediction system according to the present embodiment;
FIG. 3 is a diagram illustrating measured values of environmental parameters in the first example of operations;
FIG. 4 is a diagram illustrating measured values of harvest results in the first example of operations;
FIG. 5 is a flowchart illustrating a second example of operations by the prediction system according to the present embodiment;
FIG. 6 is a diagram illustrating measured values of environmental parameters in the second example of operations;
FIG. 7 is a diagram illustrating data that indicates a cultivation history in the second example of operations;
FIG. 8 is a diagram illustrating predicted values of harvest results in the second example of operations;
FIG. 9 is an example of output of a selection screen for a user to select desired harvest results in the second example of operations;
FIG. 10 is an example of output of a graph illustrating the values of environmental parameters that can achieve the harvest results desired by the user in the second example of operations;
FIG. 11 is a flowchart illustrating a third example of operations by the prediction system according to the present embodiment; and
FIG. 12 is a diagram illustrating values of environmental parameters specified by the user in the third example of operations.

### DETAILED DESCRIPTION

Embodiments of the present disclosure are described below with reference to the drawings. Identical reference signs in the drawings indicate identical or equivalent constituent elements.

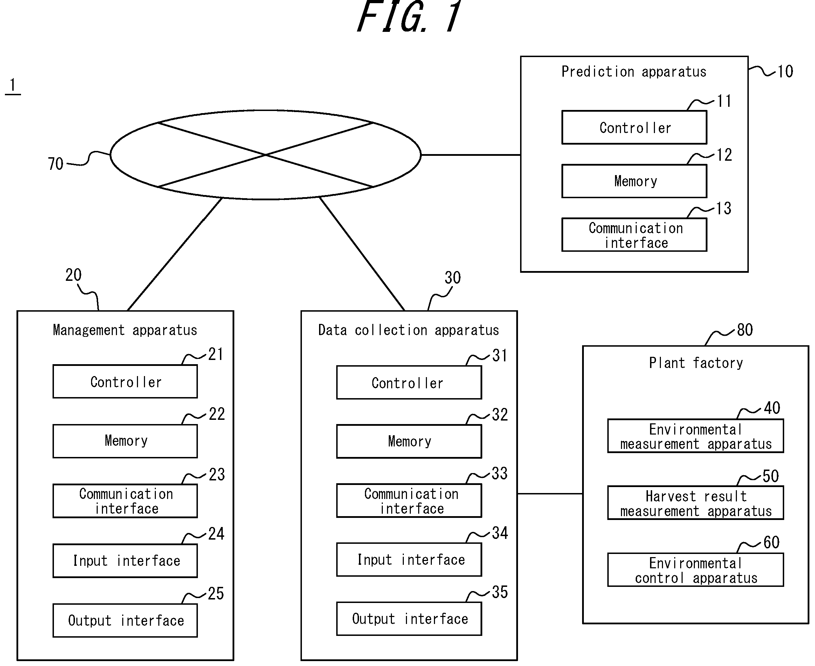

With reference to FIG. 1, a configuration of a prediction system 1 according to an embodiment of the present disclosure is described.

The prediction system 1 includes a prediction apparatus 10, a management apparatus 20, a data collection apparatus 30, an environmental measurement apparatus 40, a harvest result measurement apparatus 50, and an environmental control apparatus 60. The prediction apparatus 10 can communicate with the management apparatus 20 and the data collection apparatus 30 via a network 70 such as the Internet. The environmental measurement apparatus 40 can communicate with the data collection apparatus 30 via a local area network (LAN) or the like. The harvest result measurement apparatus 50 can communicate with the data collection apparatus 30 via a local area network (LAN) or the like.

The prediction apparatus 10 is a server belonging to a cloud computing system or the like.

The prediction apparatus 10 includes a controller 11, a memory 12, and a communication interface 13.

The controller 11 includes one or more processors. The processor may, for example, be a general-purpose processor, such as a central processing unit (CPU), or a dedicated processor specialized for particular processing. The controller 11 performs processing related to operations of the prediction apparatus 10 while controlling each component of the prediction apparatus 10.

The memory 12 includes one or more semiconductor memories, one or more magnetic memories, one or more optical memories, or a combination of these. The semiconductor memory is, for example, random access memory (RAM) or read only memory (ROM). Information used in operations of the prediction apparatus 10 and information acquired by operations of the prediction apparatus 10 are stored in the memory 12.

The communication interface 13 includes one or more communication interfaces capable, for example, of communicating over the Internet, a gateway, a local area network (LAN), or the like. The communication interface 13 receives information used in operations of the prediction apparatus 10 and transmits information acquired by operations of the prediction apparatus 10.

The operations of the prediction apparatus 10 are implemented by a processor included in the controller 11 executing a program stored in the memory 12.

The management apparatus 20 is a personal computer (PC), mobile phone, smartphone, tablet, or the like. The management apparatus 20 is provided outside the plant factory 80, but this configuration is not limiting.

The management apparatus 20 includes a controller 21, a memory 22, a communication interface 23, an input interface 24, and an output interface 25.

The controller 21 includes one or more processors. The processor may, for example, be a general-purpose processor, such as a central processing unit (CPU), or a dedicated processor specialized for particular processing. The controller 21 performs processing related to operations of the management apparatus 20 while controlling each component of the management apparatus 20.

The memory 22 includes one or more semiconductor memories, one or more magnetic memories, one or more optical memories, or a combination of these. The semiconductor memory is, for example, random access memory (RAM) or read only memory (ROM). Information used in operations of the management apparatus 20 and information acquired by operations of the management apparatus 20 are stored in the memory 22.

The communication interface 23 includes one or more communication interfaces capable, for example, of communicating over the Internet, a gateway, a local area network (LAN), or the like. The communication interface 23 receives information used in operations of the management apparatus 20 and transmits information acquired by operations of the management apparatus 20.

The input interface 24 includes one or more interfaces for input. The interface for input is, for example, a physical key, a capacitive key, a pointing device, a touchscreen integrally provided with a display, a microphone, or a combination of these. The input interface 24 receives operations to input information used in operations of the management apparatus 20.

The output interface 25 includes one or more interfaces for output. The interface for output may, for example, be a display such as a liquid crystal display (LCD) or an organic electro luminescence (EL) display, a speaker, or a combination of these. The output interface 25 outputs information obtained by operations of the management apparatus 20.

The operations of the management apparatus 20 are implemented by a processor included in the controller 21 executing a program stored in the memory 22.

The data collection apparatus 30 is a personal computer (PC) or the like. The data collection apparatus 30 is provided inside the plant factory 80, but this configuration is not limiting.

The data collection apparatus 30 includes a controller 31, a memory 32, a communication interface 33, an input interface 34, and an output interface 35.

The controller 31 includes one or more processors. The processor may, for example, be a general-purpose processor, such as a central processing unit (CPU), or a dedicated processor specialized for particular processing. The controller 31 performs processing related to operations of the data collection apparatus 30 while controlling each component of the data collection apparatus 30.

The memory 32 includes one or more semiconductor memories, one or more magnetic memories, one or more optical memories, or a combination of these. The semiconductor memory is, for example, random access memory (RAM) or read only memory (ROM). Information used in operations of the data collection apparatus 30 and information acquired by operations of the data collection apparatus 30 are stored in the memory 32.

The communication interface 33 includes one or more communication interfaces capable, for example, of communicating over the Internet, a gateway, a local area network (LAN), or the like. The communication interface 33 receives information used in operations of the data collection apparatus 30 and transmits information acquired by operations of the data collection apparatus 30.

The input interface 34 includes one or more interfaces for input. The interface for input is, for example, a physical key, a capacitive key, a pointing device, a touchscreen integrally provided with a display, a microphone, or a combination of these. The input interface 34 receives operations to input information used in operations of the data collection apparatus 30.

The output interface 35 includes one or more interfaces for output. The interface for output may, for example, be a display such as a liquid crystal display (LCD) or an organic electro luminescence (EL) display, a speaker, or a combination of these. The output interface 35 outputs information obtained by operations of the data collection apparatus 30.

The operations of the data collection apparatus 30 are implemented by a processor included in the controller 31 executing a program stored in the memory 32.

One or more environmental measurement apparatuses 40 are installed in each cultivation area in the plant factory 80. At predetermined time intervals, the environmental measurement apparatus 40 measures the CO₂ concentration, photons, humidity, temperature, or a combination of these as environmental parameters that indicate the environment of the plant factory 80. The environmental measurement apparatus 40 includes, but is not limited to, a CO₂ concentration meter, a photon meter, a humidity meter, a temperature meter, or a combination thereof. In the present embodiment, the "cultivation area" refers to a predetermined area inside the plant factory 80 where plants are transplanted according to their growth stage, such as a seeding area, a greening area, a seedling area, and a planting area. The "predetermined time interval" can be appropriately set by the user, such as to a range of several tens of minutes to several hours.

The harvest result measurement apparatus 50 is installed inside the plant factory 80. The harvest result measurement apparatus 50 measures harvest results including harvest weight and information on physiological disorders of plants cultivated in the plant factory 80. In the present embodiment, the "information on physiological disorders" includes the probability of occurrence of physiological disorders, such as tip burn, or information on whether physiological disorders have occurred. The harvest weight is measured using a known or appropriately selected scale, but this configuration is not limiting. The probability of occurrence of physiological disorders is calculated using known or appropriately selected image recognition techniques, but this configuration is not limiting. Whether physiological disorders have occurred is confirmed visually by the user, but this configuration is not limiting.

The environmental control apparatus 60 is installed inside the plant factory 80. The environmental control apparatus 60 includes, but is not limited to, lighting, air conditioning, a CO₂ generator, a nutrient solution circulator, or a combination thereof. The environmental control apparatus 60 may be controlled automatically via the management apparatus 20 or manually by the user.

The plant factory 80 is any factory where plants can be systematically cultivated.

The plants include, but are not limited to, edible plants such as vegetables, fruits, or edible flowers; medicinal plants; ornamental plants such as decorative plants; or combinations thereof. Examples of vegetables include lettuce and strawberries.

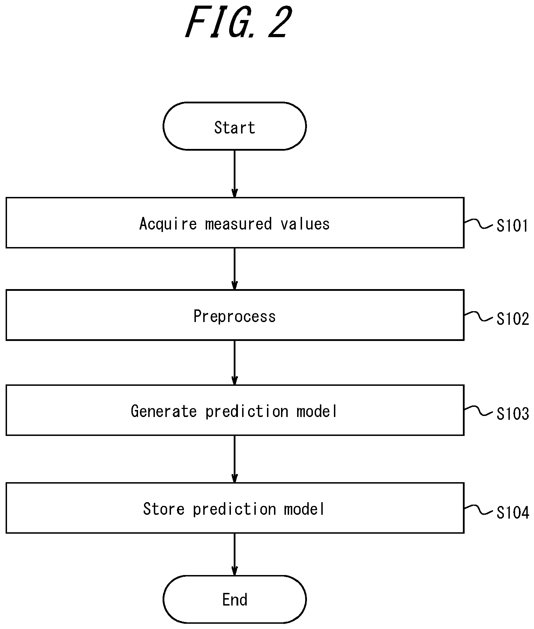

With reference to FIG. 2, a first example of operations of the prediction system 1 according to the present disclosure is described. The first example of operations corresponds to an embodiment of a prediction method according to the present disclosure.

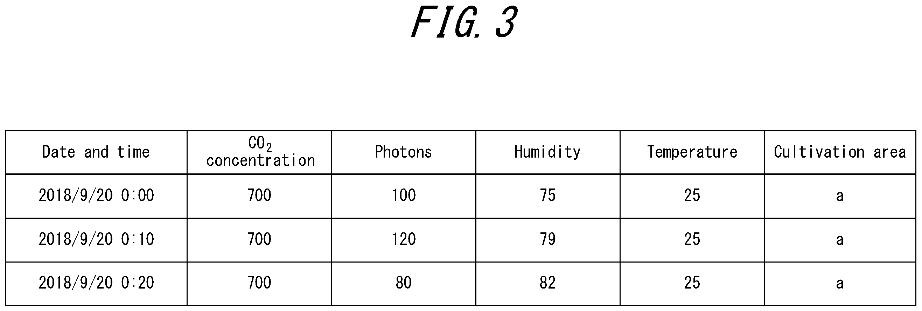

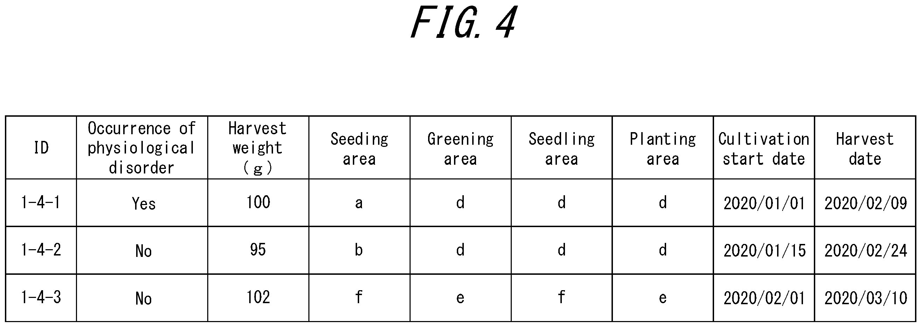

In the first example of operations, the memory 32 of the data collection apparatus 30 has stored the measured values of environmental parameters measured by the environmental measurement apparatus 40 and the measured values of the harvest results measured by the harvest result measurement apparatus 50. As illustrated in FIG. 3, the measured values of environmental parameters include the measured values of CO₂ concentration, photons, humidity, and temperature measured at predetermined time intervals from the cultivation start date for each cultivation area. The unit for CO₂ concentration is ppm, the unit for photons is µmol/m²s, the unit for humidity is %, and the unit for temperature is °C. As illustrated in FIG. 4, the measured values of the harvest results include the measured values of the harvest weight and whether physiological disorders have occurred for each ID, along with the cultivation history, which indicates information on the cultivation area where seeding, greening, seedling growth, and planting were conducted. Therefore, the data illustrated in FIGS. 3 and 4 identify the cultivation area and the environment in which the plants with each ID were cultivated. In the present embodiment, the "ID" is identification information used to manage the cultivation information of a plant. The same ID is assigned to plants that have the same cultivation area at the seeding, greening, seedling, and planting stages and the same cultivation start date.

In step S101, the controller 11 of the prediction apparatus 10 acquires the measured values of the environmental parameters and the measured values of the harvest results from the data collection apparatus 30 via the communication interface 13. The controller 11 stores the acquired measured values of the environmental parameters and the acquired measured values of the harvest results in the memory 12.

In step S102, the controller 11 of the prediction apparatus 10 retrieves the measured values of the environmental parameters and the measured values of the harvest results from the memory 12 and performs preprocessing. The "preprocessing" includes, but is not limited to, outlier processing, missing value interpolation in a time series, discretization processing, or a combination thereof.

In step S103, the controller 11 of the prediction apparatus 10 performs machine learning using the data preprocessed in S102 to generate a prediction model for calculating the predicted values of the harvest results. This machine learning is performed by using known or appropriately chosen clustering and Bayesian network techniques with variables corresponding to environmental parameters as explanatory variables and variables corresponding to harvest results as objective variables. In the present embodiment, the "clustering" refers to a method of classifying similar variables into the same cluster and includes, but is not limited to, hard clustering such as the k-means method or soft clustering such as probabilistic latent semantic analysis. A "Bayesian network" is a directed acyclic graph with variables as nodes and includes conditional probability tables between nodes. In step S103, first, the controller 11 of the prediction apparatus 10 performs unsupervised learning on the data preprocessed in S102 in order to classify similar explanatory variables into the same clusters. Subsequently, the controller 11 performs structural learning using the clustering results to generate a prediction model. The "prediction model" in the present embodiment includes, for example, parent nodes corresponding to environmental parameters, child nodes dimensionally compressed by clustering, and grandchild nodes corresponding to harvest results. However, the parent nodes and the grandchild nodes need not be linked through the child nodes and may instead be linked directly.

In step S104, the controller 11 of the prediction apparatus 10 stores the prediction model generated in S103 in the memory 12.

According to the first example of operations, a highly versatile prediction model that takes into account harvest weight and information on physiological disorders, which conflict with each other, is obtained. Labor and costs can be reduced when this prediction model is used to manage the plant factory 80 according to the second and third examples of operations, described next.

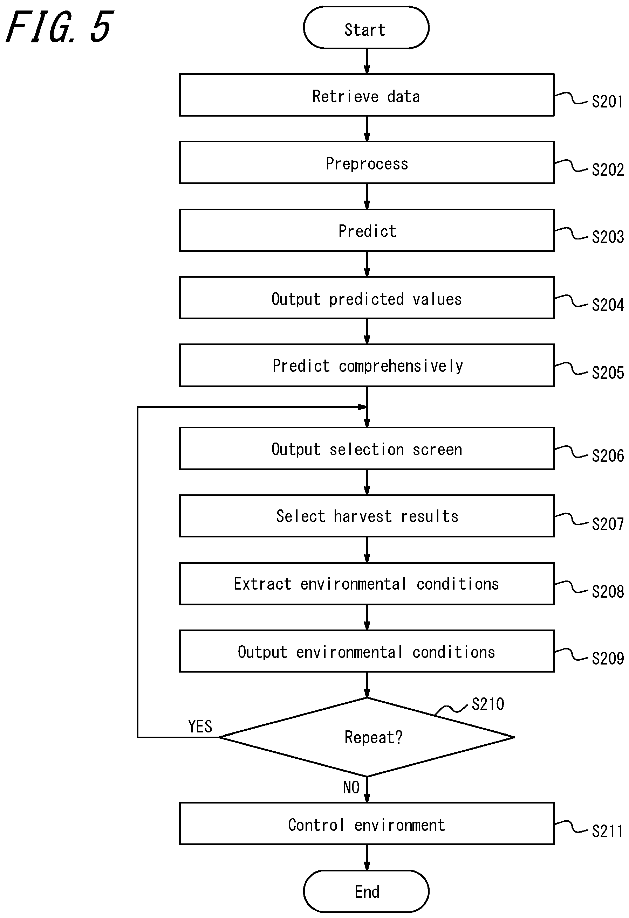

With reference to FIG. 5, a second example of operations of the prediction system 1 according to the present disclosure is described. The second example of operations corresponds to an embodiment of a prediction method according to the present disclosure.

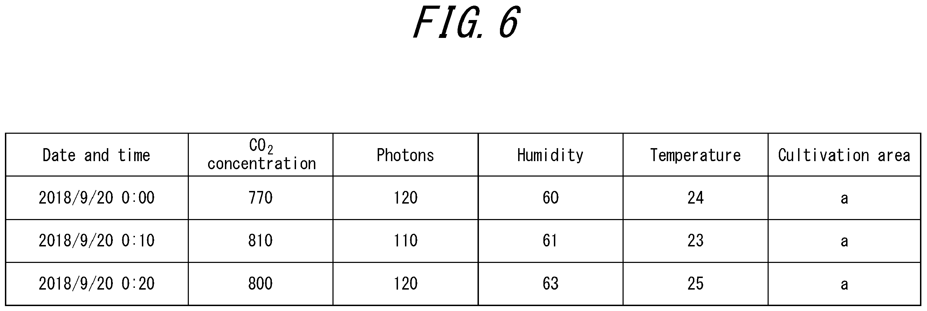

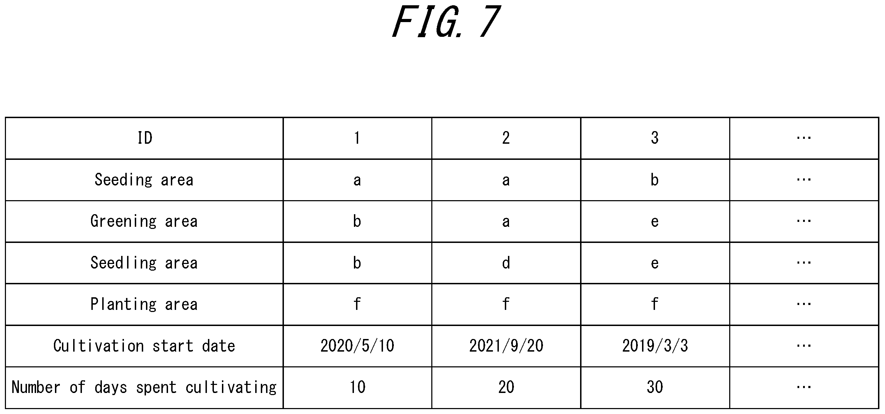

In the second example of operations, the memory 32 of the data collection apparatus 30 has stored the measured values of environmental parameters measured by the environmental measurement apparatus 40. The memory 32 of the data collection apparatus 30 has also stored data indicating the cultivation history acquired from the management apparatus 20. As illustrated in FIG. 6, the measured values of environmental parameters include the measured values of CO₂ concentration, photons, humidity, and temperature measured at predetermined time intervals from the cultivation start date to a predetermined point in time for each cultivation area. The "predetermined point in time" is, for example, appropriately set based on user input via the input interface 24 of the management apparatus 20. As illustrated in FIG. 7, the data indicating the cultivation history includes, for each ID, information indicating the cultivation area in the seeding stage, greening stage, seedling stage, and planting stage from the start of cultivation to a freely chosen point in time.

In step S201, the controller 11 of the prediction apparatus 10 acquires the measured values of the environmental parameters and the data indicating the cultivation history from the data collection apparatus 30 via the communication interface 13 and stores this information in the memory 12.

In step S202, the controller 11 of the prediction apparatus 10 retrieves the measured values of the environmental parameters and the data indicating the cultivation history from the memory 12 and performs preprocessing. This preprocessing is the same as in step S102.

In the second example of operations, the controller 11 of the prediction apparatus 10 determines to calculate the predicted values of the harvest results in a case in which the plants are cultivated until harvest time without changing the environment of the plant factory at a predetermined point in time after the start of cultivation. The controller 11 of the prediction apparatus 10 makes this determination based on input from the user via, for example, the input interface 24 of the management apparatus 20. For example, the controller 21 of the management apparatus 20 outputs, via the output interface 25, a dialog box to the user asking whether to calculate the predicted values of the harvest results as described above. Subsequently, the controller 21 of the management apparatus 20 accepts, via the input interface 24, an operation by the user to input a response. The controller 21 of the management apparatus 20 then transmits, via the communication interface 23, data indicating the user's response to the prediction apparatus 10. In this way, the controller 11 of the prediction apparatus 10 can make the determination described above.

In step S203, the controller 11 of the prediction apparatus 10 retrieves the prediction model generated in the first example of operations from the memory 12. The controller 11 inputs the data preprocessed in step S202 to the retrieved prediction model. The values of the environmental parameters at the predetermined point in time from the start of cultivation are used as the values of the environmental parameters from the predetermined point in time after the start of cultivation until the harvest time. In this way, the predicted values of the harvest results are calculated for a case in which the plants are cultivated until harvest time without changing the environment of the plant factory 80 at a predetermined point in time after the start of cultivation.

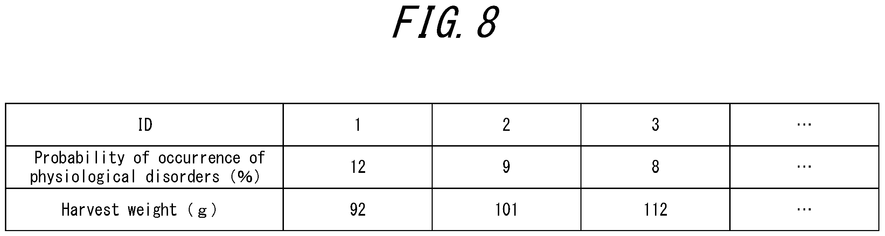

In step S204, the controller 11 of the prediction apparatus 10 transmits the predicted values of the harvest results calculated in step S203 to the management apparatus 20 via the communication interface 13. The controller 21 of the management apparatus 20 receives the predicted values of the harvest results from the prediction apparatus 10 via the communication interface 23. The controller 21 of the management apparatus 20 outputs the received predicted values of the harvest results to the user via the output interface 25. In the example of output illustrated in FIG. 8, the predicted values of the harvest weight and the probability of occurrence of physiological disorders are outputted for each ID.

In step S205, the controller 11 of the prediction apparatus 10 calculates the predicted values of the harvest results by changing the value of the environmental parameter and inputting each changed value of the environmental parameter into the prediction model. In this way, the predicted values of the harvest results corresponding to each value of the environmental parameters are calculated comprehensively. The controller 11 also generates a data table associating the values of the environmental parameters changed in step S205 and the predicted values of the harvest results calculated in step S205. The controller 11 stores the generated data table in the memory 12. In the present embodiment, "changing the values of the environmental parameters" means, for example, changing the value of the CO₂ concentration, photons, humidity, temperature, or a combination thereof by predetermined increments in a predetermined range, such as changing the temperature from 22°C to 27°C in 1°C increments. The "predetermined range" and the "predetermined increments" are appropriately set based, for example, on user input via the input interface 24 of the management apparatus 20.

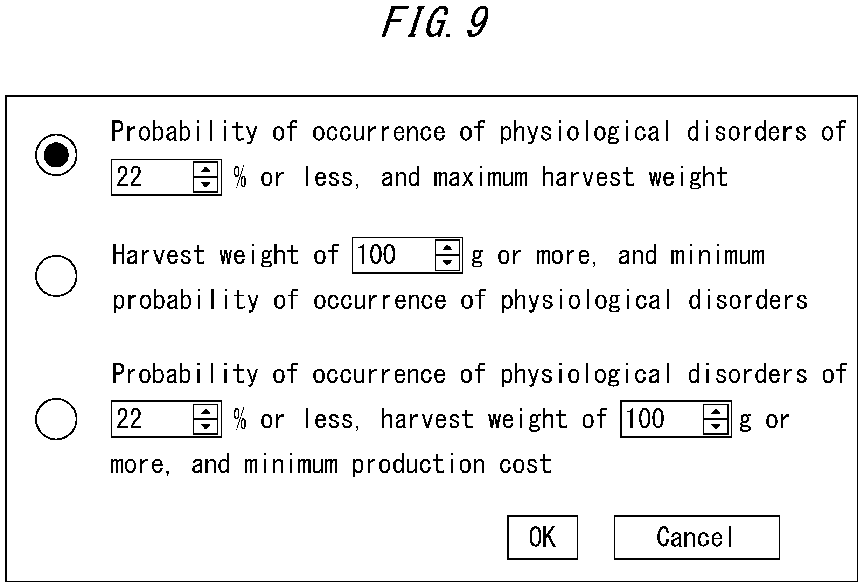

In step S206, the controller 21 of the management apparatus 20 outputs a selection screen, via the output interface 25, for the user to select the desired harvest results. In the example of output illustrated in FIG. 9, the user can select the desired harvest results from a plurality of candidate harvest results: "harvest weight: maximum", "probability of occurrence of physiological disorders: minimum", and "production cost: minimum". The candidate harvest results outputted on the selection screen are set appropriately based on the user's input via the input interface 24 of the management apparatus 20, for example. The production cost is calculated based on the power consumption estimated from the environmental conditions, along with costs for labor, transportation, and the like, which vary depending on the prediction results of the prediction model.

In step S207, the controller 21 of the management apparatus 20 accepts, via the input interface 24, an operation by the user to select the desired harvest results. In the example of output illustrated in FIG. 9, the harvest results "Probability of occurrence of physiological disorders: 22% or less" and "Harvest weight: maximum" are selected as the harvest results desired by the user. The controller 21 of the management apparatus 20 transmits the data indicating the user's desired harvest results, selected by the user, to the prediction apparatus 10 via the communication interface 23.

In step S208, the controller 11 of the prediction apparatus 10 receives data indicating the harvest results desired by the user from the management apparatus 20 via the communication interface 13. The controller 11 of the prediction apparatus 10 refers to the data table stored in the memory 12 in step S205 to extract the values of the environmental parameters corresponding to the harvest results desired by the user. In the example of output illustrated in FIG. 9, the user desires the harvest results "Probability of occurrence of physiological disorders: 22% or less" and "Harvest weight: maximum". Therefore, in step S208, the values of the environmental parameters corresponding to the harvest results "Probability of occurrence of physiological disorders: 22% or less" and "Harvest weight: maximum" are extracted. The controller 11 of the prediction apparatus 10 transmits the extracted values of the environmental parameters to the management apparatus 20 via the communication interface 13.

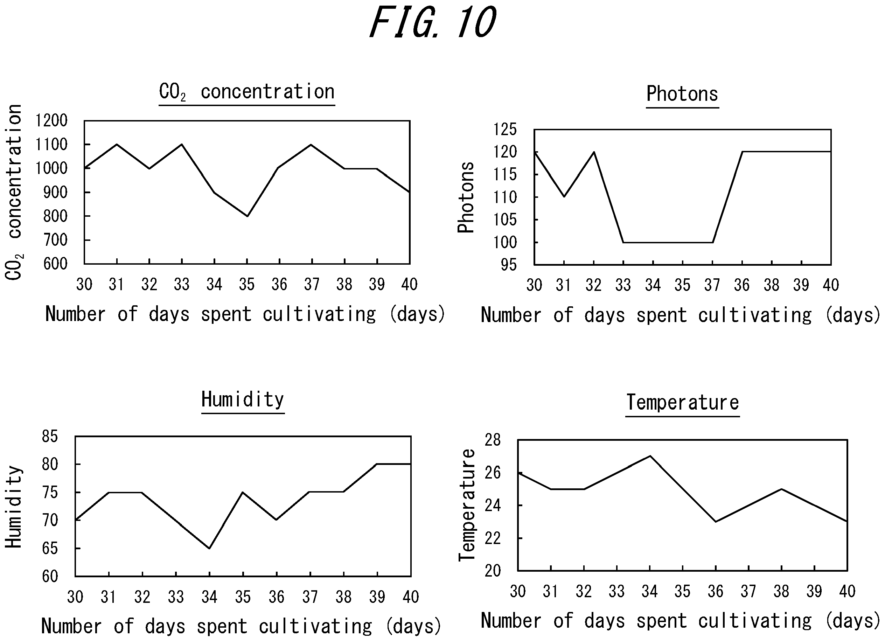

In step S209, the controller 21 of the management apparatus 20 receives the values of the environmental parameters extracted from the prediction apparatus 10 via the communication interface 23. The controller 21 outputs the received values of the environmental parameters to the user via the output interface 25. In the example of output illustrated in FIG. 10, the change over time in the target values of the CO₂ concentration, photons, humidity, and temperature of the plant factory 80 from the predetermined point in time after the start of cultivation until the harvest time are displayed as a graph. This enables the user to recognize the environmental conditions required to achieve the desired harvest results.

In step S210, the controller 21 of the management apparatus 20 determines whether to repeat the process of steps S206 through S209 based on user input. In a case in which it is determined that steps S206 through S209 are to be repeated (step S210: YES), the controller 21 returns to step S206. In a case in which it is determined that steps S206 through S209 are not to be repeated (step S210: NO), the controller 21 advances to step S211. The controller 21 of the management apparatus 20 can make this determination by outputting a dialog box to the user, via the output interface 25, asking whether to repeat the process of steps S206 through S209 and accepting an operation by the user to input a response via the input interface 24.

In step S211, the user controls the environmental control apparatus 60 based on the values of the environmental parameters outputted in step S209. However, in step S211, the environmental control apparatus 60 may instead be automatically controlled via the management apparatus 20.

According to the second example of operations, the user can manage the plant factory 80 using a prediction model that takes into account harvest weight and information on physiological disorders, which conflict with each other, thereby enabling the user to formulate accurate sales plans. The yield of the plant factory 80 is also improved, since the environmental conditions needed to achieve the harvest results desired by the user are presented to the user. In particular, by the harvest results being comprehensively predicted in step S205, the user can efficiently recognize the environmental conditions needed to achieve the desired harvest results.

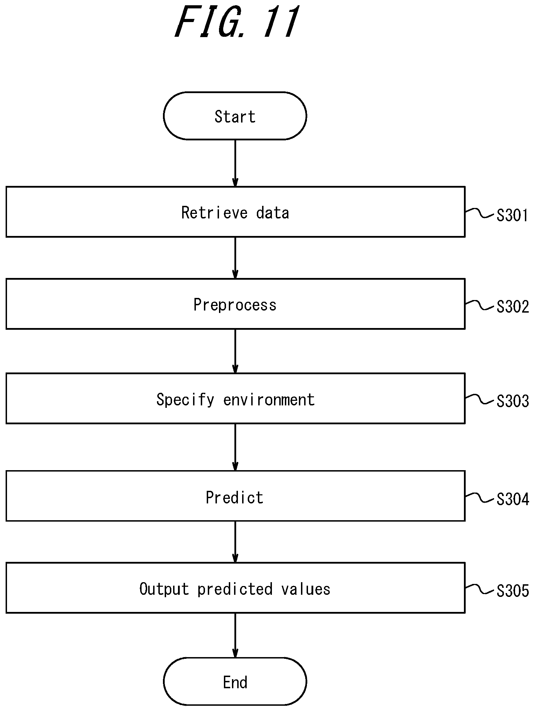

With reference to FIG. 11, a third example of operations of the prediction system 1 according to the present disclosure is described. The third example of operations corresponds to an embodiment of a prediction method according to the present disclosure.

In the third example of operations, the memory 32 of the data collection apparatus 30 has stored the measured values of environmental parameters measured by the environmental measurement apparatus 40. The memory 32 of the data collection apparatus 30 has also stored data indicating the cultivation history acquired from the management apparatus 20. The "measured values of the environmental parameters" and "data indicating the cultivation history" in the third example of operations are the same as in the second example of operations.

In step S301, the controller 11 of the prediction apparatus 10 acquires the measured values of the environmental parameters and the data indicating the cultivation history from the data collection apparatus 30 via the communication interface 13 and stores this information in the memory 12.

In step S302, the controller 11 of the prediction apparatus 10 retrieves the measured values of the environmental parameters and the data indicating the cultivation history from the memory 12 and performs preprocessing. This preprocessing is the same as in step S102.

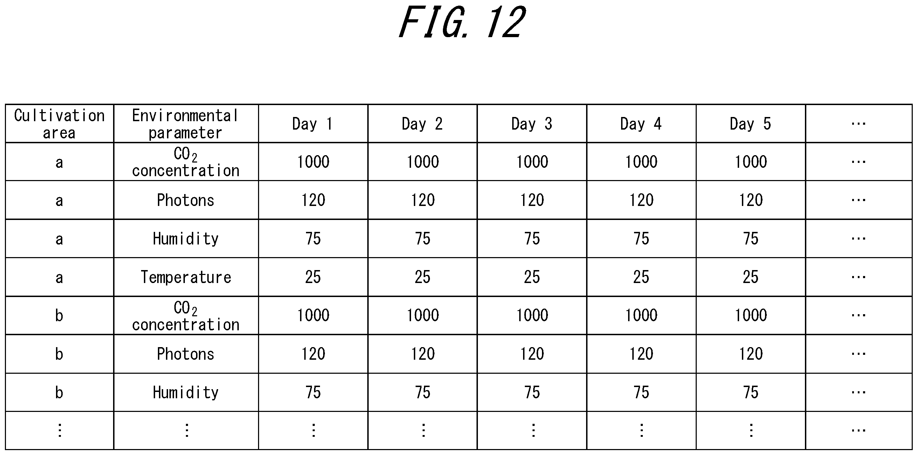

In step S303, the controller 21 of the management apparatus 20 accepts, via the input interface 24, an operation by which the user specifies the values of the environmental parameters from a predetermined point in time after the start of cultivation of the plants until the harvest time. The controller 21 of the management apparatus 20 transmits, via the communication interface 23, the values of the environmental parameters specified by the user to the prediction apparatus 10. FIG. 12 illustrates the values of the environmental parameters specified by the user.

In step S304, the controller 11 of the prediction apparatus 10 retrieves the prediction model generated in the first example of operations from the memory 12. The controller 11 receives, via the communication interface 13, the values of the environmental parameters specified by the user in step S303. The controller 11 of the prediction apparatus 10 inputs the data preprocessed in step S302 and the values of the environmental parameters specified by the user in step S303 into the prediction model. As a result, the controller 11 calculates the predicted values of the harvest results in a case in which the plants are cultivated until harvest time after changing the environment of the plant factory 80, at a predetermined point in time after the start of cultivation of the plants, to an environment specified by the user.

In step S305, the controller 11 of the prediction apparatus 10 transmits the predicted values of the harvest results calculated in step S304 to the management apparatus 20 via the communication interface 13. The controller 21 of the management apparatus 20 receives the predicted values of the harvest results from the prediction apparatus 10 via the communication interface 23. The controller 21 of the management apparatus 20 outputs the predicted values of the harvest results to the user via the output interface 25.

According to the third example of operations, in a case in which the plant factory 80 needs to operate in a restricted environment, such as low power consumption, the harvest results under this environment can be predicted, thereby enabling the user to formulate accurate sales plans. Also, in a case in which the user wishes to change the environment of the plant factory 80 on an experimental basis, the harvest results can be predicted without actually changing the environment of the plant factory 80.

The present disclosure is based on drawings and embodiments, but it should be noted that a person of ordinary skill in the art could make a variety of changes or modifications based on the present disclosure. Therefore, such changes and modifications are to be understood as included within the scope of the present disclosure. For example, the functions and the like included in the various steps and the like may be reordered in any logically consistent way. Furthermore, a plurality of steps or the like may be combined into one, or a single step or the like may be divided.

### INDUSTRIAL APPLICABILITY

According to the present disclosure, a prediction apparatus, a prediction system, and a prediction method that can predict harvest results while taking into account harvest weight and physiological disorders can be provided.

### REFERENCE SIGNS LIST

- 1: Prediction system
- 10: Prediction apparatus
- 11: Controller
- 12: Memory
- 13: Communication interface
- 20: Management apparatus
- 21: Controller
- 22: Memory
- 23: Communication interface
- 24: Input interface
- 25: Output interface
- 30: Data collection apparatus
- 31: Controller
- 32: Memory
- 33: Communication interface
- 34: Input interface
- 35: Output interface
- 40: Environmental measurement apparatus
- 50: Harvest result measurement apparatus
- 60: Environmental control apparatus
- 70: Network
- 80: Plant factory

## Claims

1. A prediction apparatus comprising:
a memory storing a prediction model for calculating a predicted value of a harvest result including harvest weight and information on physiological disorders of plants in a plant factory, and a value of an environmental parameter indicating an environment of the plant factory;
a controller configured to input the value of the environmental parameter retrieved from the memory into the prediction model to calculate the predicted value of the harvest result; and
a communication interface configured to output the predicted value of the harvest result calculated by the controller.

2. The prediction apparatus according to claim 1, wherein
the controller extracts the value of the environmental parameter corresponding to a harvest result desired by a user by referring to a data table in which the value of the environmental parameter is associated with the predicted value of the harvest result, and
the communication interface outputs the value of the environmental parameter extracted by the controller.

3. The prediction apparatus according to claim 2, wherein the controller calculates the predicted value of the harvest result by changing the value of the environmental parameter and inputting each changed value of the environmental parameter into the prediction model and generates the data table by associating the changed value of the environmental parameter with the calculated predicted value of the harvest result.

4. The prediction apparatus according to any one of claims 1 to 3, wherein the controller calculates the predicted value of the harvest result in a case in which the plants are cultivated until harvest time without changing the environment of the plant factory at a predetermined point in time after a start of cultivation of the plants.

5. The prediction apparatus according to any one of claims 1 to 3, wherein the controller calculates the predicted value of the harvest result in a case in which the plants are cultivated until harvest time after changing the environment of the plant factory, at a predetermined point in time after a start of cultivation of the plants, to an environment specified by a user.

6. The prediction apparatus according to any one of claims 1 to 5, wherein the controller generates the prediction model by performing machine learning using a measured value of the environmental parameter and a measured value of the harvest result and stores the generated prediction model in the memory.

7. The prediction apparatus according to any one of claims 1 to 6, wherein the harvest result further includes information on a production cost of the plants.

8. A prediction system comprising the prediction apparatus according to any one of claims 1 to 7 and a management apparatus configured to communicate with the prediction apparatus, wherein the output is performed via the management apparatus.

9. A prediction method using a computer, the prediction method comprising:
inputting a value of an environmental parameter of a plant factory into a prediction model, for calculating a predicted value of a harvest result including harvest weight and information on physiological disorders of plants in the plant factory, to calculate the predicted value of the harvest result; and
outputting the calculated predicted value of the harvest result.
